Europäisches Patentamt

(19) European Patent Office

Office européen des brevets

(11) Veröffentlichungsnummer: **0 018 012**
**B1**

(12) **EUROPÄISCHE PATENTSCHRIFT**

(45) Veröffentlichungstag der Patentschrift:
**18.05.83**

(21) Anmeldenummer: **80102138.7**

(22) Anmeldetag: **21.04.80**

(51) Int. Cl.³: **H 04 L 5/06,** H 04 B 3/03,
H 04 B 12/02, H 04 B 12/04

(54) **Digital-Fernmeldesystem für Zweidraht-Getrenntlage-Betrieb.**

(30) Priorität: **24.04.79 DE 2916576**

(43) Veröffentlichungstag der Anmeldung:
**29.10.80 Patentblatt 80/22**

(45) Bekanntmachung des Hinweises auf die Patenterteilung:
**18.05.83 Patentblatt 83/20**

(84) Benannte Vertragsstaaten:
**BE CH FR GB IT LI SE**

(56) Entgegenhaltungen:
**DE-A-2 245 290**
**DE-A-2 809 401**
**DE-C-2 157 243**
**GB-A-1 320 783**
**GB-A-1 506 262**
**US-A-3 937 882**

(73) Patentinhaber: **SIEMENS AKTIENGESELLSCHAFT,**
**Berlin und München Wittelsbacherplatz 2,**
**D-8000 München 2 (DE)**

(72) Erfinder: **Strehl, Herbert, Dipl.-Ing., Drozzaweg 15,**
**D-8000 München 70 (DE)**

Digital-Fernmeldesystem für Zweidraht-Getrenntlage-Betrieb

In Fernmeldesystemen werden u.a. zur Überführung der vierdrähtigen Teilnehmerseite einer Endstelle in eine Zweidrahtleitung Gabelschaltungen (Brückenschaltungen) verwendet. Solche Gabelschaltungen, die eine von der jeweiligen Leitungsimpedanz abhängige Sperrdämpfung aufweisen, vermögen die Sende- und Empfangssignale indessen nur begrenzt voneinander zu entkoppeln, so dass bei Anschluss von Analog-Fernsprechteilnehmern ein (akzeptables) Mithören der eigenen Sprache verbleibt, bei Anschluss von Digital-Fernsprech- oder Daten-Teilnehmern indessen eine nicht mehr akzeptable Störung des Empfangssignals durch das eigene Sendesignal gegeben sein kann.

Um dem zu begegnen, kann man die Gabelsperrdämpfung verbessern, indem man etwa (z.B. gemäss DE-A-2 628 852) einen automatischen Abgleich der Leitungsnachbildung vornimmt oder (z.B. gemäss DE-A-2 543 130) eine Kompensation der eigenen Sendeimpulse im Empfangszweig vorsieht; selbst bei einer derart verbesserten Gabelsperrdämpfung lässt sich indessen eine Reichweite, die wesentlich grösser als 4 km ist, nicht erreichen, weil dann die Störung der schwachen Empfangssignale durch die eigenen Sendesignale zu gross wird, wobei noch hinzukommt, dass beim Einsatz in Ortsnetzen noch eine Reserve für das Nahnebensprechen vorhanden sein muss.

Zur Entkopplung von Sende- und Empfangssignalen kann man auf der Zweidrahtleitung auch eine Nachrichtenübertragung im Getrenntlageverfahren vorsehen, indem man für die beiden Übertragungsrichtungen (z.B. gemäss DE-B-2 346 984 oder DE-A-2 511 619) zeitlich oder (z.B. gemäss DE-A-2 713 854) in der Frequenzlage voneinander getrennte Übertragungskanäle vorsieht. In diesem Zusammenhang ist (in der deutschen Patentanmeldung DE-A-2 807 785.2-32) auch schon vorgeschlagen worden, eine gewöhnliche Gabelschaltung mit einem vereinfachten Frequenzmultiplexverfahren zu kombinieren, indem durch einen Frequenz- oder Codeumsetzer der Schwerpunkt des Frequenzspektrums der Sendesignale von demjenigen der Empfangssignale getrennt wird und im Empfangszweig ein die Signale des eigenen Senders unterdrückendes Frequenzfilter eingefügt wird, dessen Sperrdämpfung sich zur derjenigen der Gabelschaltung addiert. Dabei erfordert die Verlagerung des Schwerpunktes des Frequenzspektrums der Sendesignale im Sendezweig der betreffenden Digital-Endstelle ein der Sendesignalimpulsformung dienendes Filter, welches verhindert, dass das Frequenzspektrum der Sendesignalimpulse sich zu sehr mit demjenigen der Empfangssignalimpulse überschneidet. Diese Impulsformung stellt relativ hohe Ansprüche an die Filtergüte, wenn die Entkopplung von Sende- und Empfangssignalimpulsen hohe Werte erreichen soll. Die Erfindung zeigt demgegenüber einen Weg, einen solchen Filteraufwand zu vermeiden und auf ganz andere Weise die gewünschte Impulsformung und damit Verlagerung des Schwerpunkts des Frequenzspektrums zu erzielen.

Die Erfindung betrifft ein Digital-Fernmeldesystem mit Digital-Endstellen, die einen Sendeteil zum Aussenden von Sendesignalimpulsen mit einem vorgegebenen Schwerpunkt ihres Frequenzspektrums und einen Empfangsteil zum Empfangen von Empfangssignalimpulsen mit einem anderen Schwerpunkt ihres Frequenzspektrums aufweisen, welche über eine Gabelschaltung mit einer Zweidrahtleitung verbunden sind; dieses Digital-Fernmeldesystem ist erfindungsgemäss dadurch gekennzeichnet, dass zur Umsetzung des Frequenzspektrums der in einer Digital-Endstelle erzeugten Digitalsignale in die auszusendenden Sendesignalimpulse im Sendeteil der Digital-Endstelle ein Momentanwert der Sendesignalimpulse codiert speichernder und nach Massgabe der Digitalsignale angesteuerter Festwertspeicher vorgesehen ist, der die entsprechenden Momentanwerte in ihrer codierten Darstellung einem Decoder (Demodulator) zuführt, der daraus die entsprechenden Sendesignalimpulse bildet.

Die Erfindung bringt den Vorteil mit sich, im Sendezweig der Digital-Endstellen ohne ein aufwendiges Filter auskommen zu können und dennoch in der Entkopplung von Sende- und Empfangssignalimpulsen hohe Werte zu erreichen.

Es sei an dieser Stelle bemerkt, dass es zur kontinuierlichen Erzeugung sinusförmiger Spannungen durch zeitliche Synthese von Gleichspannungen verschiedener Höhe (z.B. aus DE-C-2 157 243) bekannt ist, entsprechende Sinuswerte in binär codierter Form einem Festwertspeicher zu entnehmen und einem D-A-Wandler zuzuführen; Probleme eines Zweidraht-Vierdraht-Übergangs und einer Verlagerung von Frequenzspektren werden dabei indessen nicht berührt.

In weiterer Ausgestaltung der Erfindung kann der Festwertspeicher die Momentanwerte der Sendesignalimpulse in ΔM-Darstellung speichern, was den Vorteil eines entsprechend einfachen Decoders mit sich bringt; nach einer alternativen Ausgestaltung der Erfindung kann der Festwertspeicher die Momentanwerte der Sendesignalimpulse aber auch in PCM-Darstellung speichern, wobei dann weniger Speicherzellen anzusteuern sind, d.h. der Speicher mit niedrigerer Taktgeschwindigkeit betrieben werden kann.

Anhand der Zeichnung sei die Erfindung noch näher erläutert. Dabei zeigt

Fig. 1 ein Ausführungsbeispiel für ein Fernmeldesystem gemäss der Erfindung;

Fig. 2 verdeutlicht die unterschiedliche Lage des Schwerpunktes des Frequenzspektrums von Sende- und Empfangssignalimpulsen.

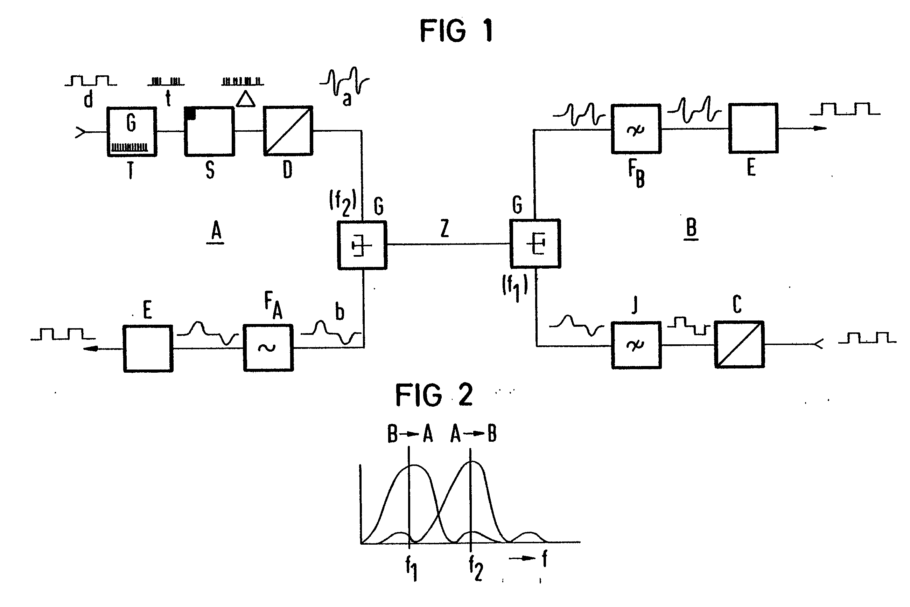

In der Zeichnung Fig. 1 ist ein Fernmeldesystem mit zwei Digital-Endstellen A und B mit jeweils getrennten Sende- und Empfangsteilen dargestellt, deren Sende- und Empfangsteile jeweils über eine Gabelschaltung G mit einer Zweidrahtleitung Z verbunden sind.

Die Digital-Endstelle A weist einen Sendeteil T,
S, D zum Aussenden von Sendesignalimpulsen
mit einem vorgegebenen Schwerpunkt ihres Frequenzspektrums auf, wie er in Fig. 2 bei der Frequenz $f_2$ angedeutet ist; in Fig. 1 ist dazu angedeutet, dass dieses Frequenzspektrum durch Umsetzung von teilnehmerseitig zugeführten Binärsignalen d in CDP-(Condition-Diphase-)Signale a
erzielt wird.

Des weiteren weist die Digital-Endstelle A einen
Empfangsteil F, E zum Empfangen von Empfangssignalimpulsen mit einem Schwerpunkt ihres Frequenzspektrums auf, wie er in Fig. 2 bei der Frequenz $f_1$ angedeutet ist. Der Empfangsteil der Digital-Endstelle A weist dabei ein auf das Spektrum
der Empfangssignalimpulse ausgerichtetes Frequenzfilter $F_A$ auf; diesem Frequenzfilter $F_1$ ist ein
Empfangssignalwandler E nachgeschaltet, der die
vom Frequenzfilter $F_A$ abgegebenen Signale in
entsprechende Binärsignale umformt, wobei bei
Zugrundelegung der in Fig. 1 angedeuteten Signalformen ein solcher Empfangssignalwandler
im Prinzip durch eine Gleichrichter-Begrenzer-
Schaltung gebildet sein kann.

Umgekehrt weist die Digital-Endstelle B einen
Sendeteil C, J zum Aussenden von Sendesignalimpulsen mit einem Schwerpunkt ihres Frequenzspektrums auf, wie er in Fig. 2 bei der Frequenz $f_1$ angedeutet ist; in Fig. 2 ist dazu angedeutet, dass dieses Frequenzspektrum durch Umsetzung von teilnehmerseitig zugeführten Binärsignalen in sogenannte AMI-(alternate-mark-inversion-)Signale erzielt wird.

Des weiteren weist die Digital-Endstelle B einen
Empfangsteil zum Empfangen von Empfangssignalimpulsen mit einem Schwerpunkt ihres Frequenzspektrums auf, wie er in Fig. 2 bei der Frequenz $f_2$ angedeutet ist; der Empfangsteil kann
dabei in gleicher Weise wie derjenige der Digital-
Endstelle A aufgebaut sein, wobei das Frequenzfilter $F_B$ im Beispiel jedoch nicht wie das Frequenzfilter $F_A$ auf das Frequenzspektrum von AMI-
Signalen, sondern auf das Frequenzspektrum von
CDP-Signalen ausgerichtet ist.

Wie in Fig. 1 angedeutet ist, kann der Sendeteil
der Digital-Endstelle B einen Codewandler C aufweisen, der die ihm eingangsseitig zugeführten
Binärsignale in AMI-Signale umsetzt, die dann in
einem nachfolgenden Sendefilter J eine Impulsformung erfahren, so dass ihr (in Fig. 2 mit dem
Schwerpunkt bei $f_1$ dargestelltes) Frequenzspektrum die gewünschte Lage bzw. Form erhält, in
der es sich allenfalls begrenzt mit dem Frequenzspektrum der in der Digital-Endstelle B ankommenden Empfangssignalimpulse überschneidet.
Eine solche Impulsformung stellt, wie schon gesagt, relativ hohe Ansprüche an die Filtergüte,
wenn die Entkopplung von Sende- und Empfangssignalimpulsen hohe Werte erreichen soll.

Erfindungsgemäss wird nun die gewünschte
Frequenzumsetzung und Impulsformung auf ganz
andere Weise bewirkt, wie dies in Fig. 1 für den
Sendeteil der Digital-Endstelle A angedeutet ist,
wobei die in der Digital-Endstelle A erzeugten Digitalsignale d in CDP-(Condition-Diphase-)Signale a umzusetzen sein mögen, deren Frequenzspektrum in Fig. 2 mit dem Schwerpunkt bei $f_2$
dargestellt ist.

Erfindungsgemäss ist in dem Sendeteil der Digital-Endstelle ein Festwertspeicher S vorgesehen,
der Momentanwerte der gewünschten Sendesignalimpulse codiert speichert. Diese Momentanwerte können einmalig in einem Simulator optimal
errechnet werden und daraufhin fest in den Speicher S eingegeben worden sein. Der Code, in dem
die Momentanwerte der Sendesignalimpulse gespeichert sind, kann grundsätzlich beliebig gewählt sein; zweckmässig ist eine ΔM-Darstellung,
da dann der dem Speicher S nachfolgende Decoder (Demodulator) D entsprechend einfach wird:
Er enthält dann ein einfaches Integrationsglied.

Der Festwertspeicher S wird nach Massgabe
der in der Digital-Endstelle A erzeugten Digitalsignale d angesteuert, so dass auf jeden Digitalsignal-Impuls hin die die einzelnen Momentanwerte
eines Ausgangssignalimpulses bzw. -dipulses codiert speichernden Speicherzellen des Festwertspeichers S sukzessive ausgelesen werden. Dieses Auslesen des Festwertspeichers S geht mit
einer der Anzahl der Speicherzellen entsprechenden höheren Taktgeschwindigkeit vor sich, beispielsweise mit der zehnfachen Taktgeschwindigkeit, wenn im Festwertspeicher S zur Darstellung
eines Ausgangssignalimpulses bzw. -dipulses
zehn ΔM-Signalelemente gespeichert sind, wie
sie in Fig. 1 mit Δ angedeutet sind. Aus Fig. 1 wird
dazu ersichtlich, dass die Speicheransteuerung
von einem Taktgenerator T her bewirkt werden
kann, der im Rhythmus der in der Digital-Endstelle A erzeugten Digitalsignale d gesteuert wird und
dabei entsprechende Ansteuersignale t an den
Festwertspeicher S, der bei Speicherung von ΔM-
Signalelementen durch ein zu einem Ring geschlossenes Schieberegister gebildet sein kann,
liefert.

Werden die Momentanwerte der Sendesignalimpulse nicht in ΔM-Darstellung, sondern in
PCM-Darstellung gespeichert, so kann die Ansteuerung des dann entsprechend weniger, aber
breitere Speicherzellen aufweisenden Festwertspeichers entsprechend langsamer vor sich gehen; als Decoder ist dann ein entsprechender
PCM-Decoder vorzusehen.

**Patentansprüche**

1. Digital-Fernmeldesystem mit Digital-Endstellen, die einen Sendeteil zum Aussenden von Sendesignalimpulsen mit einem vorgegebenen
Schwerpunkt ihres Frequenzspektrums und einen
Empfangsteil zum Empfangen von Empfangssignalimpulsen mit einem anderen Schwerpunkt ihres Frequenzspektrums aufweisen, welche über
eine Gabelschaltung mit einer Zweidrahtleitung
verbunden sind, dadurch gekennzeichnet, dass
zur Umsetzung des Frequenzspektrums der in einer Digital-Endstelle (A) erzeugten Digitalsignale
(d) in die auszusendenden Sendesignalimpulse (a) im Sendeteil der Digital-Endstelle (A) ein Festwertspeicher (S) vorgesehen ist, in dessen Speicherzellen Momentanwerte der Sendesignalimpulse codiert gespeichert sind und der nach Massgabe der Digitalsignale (d) angesteuert wird, so dass die Speicherzellen sukzessive ausgelesen und die Momentanwerte in ihrer codierten Darstellung einem Decoder (Demodulator) (D) zugeführt werden, welcher daraus die entsprechenden Sendesignalimpulse (a) bildet.

2. Digital-Fernmeldesystem nach Anspruch 1, dadurch gekennzeichnet, dass die Momentanwerte der Sendesignalimpulse in PCM-Darstellung gespeichert sind.

3. Digital-Fernmeldesystem nach Anspruch 1, dadurch gekennzeichnet, dass die Momentanwerte der Sendesignalimpulse in ΔM-Darstellung gespeichert sind.

## Claims

1. Digital telecommunications system comprising digital end stations which possess a transmitting section for transmitting transmission signal pulses having a predetermined centre of gravity of their frequency spectrum, and which possess a receiving section for receiving reception signal pulses having a different centre of gravity of their frequency spectrum, and which are connected to a two-wire line by means of a hybrid set, characterised in that in order to convert the frequency spectrum of the digital signals (d) produced in a digital end station (A) into the transmission signal pulses (a) to be transmitted, the transmitting section of the digital end station (A) is provided with a read-only memory (S), in whose storage cells are stored instantaneous values of the transmission signal pulses in a coded fashion and which is controlled in accordance with the digital signals (d), so that the storage cells are read out successively and the instantaneous values are fed to a decoder (demodulator) (D) in their coded form, which decoder forms the appropriate transmission signal pulses (a) therefrom.

2. Digital telecommunications system as claimed in claim 1, characterised in that the instantaneous values of the transmission signal pulses are stored in a PCM-format.

3. Digital telecommunications system as claimed in claim 1, characterised in that the instantaneous values of the transmission signal pulses are stored in a ΔM-format.

## Revendications

1. Système de télécommunications numérique à postes d'abonnés numériques, qui comporte une partie émettrice pour émettre des impulsions de signaux d'émission à centre de gravité déterminé de son spectre de fréquences et une partie réceptrice pour recevoir des signaux de réception avec un autre centre de gravité de son spectre de fréquences, reliées à une ligne bifilaire par un termineur d'un circuit à quatre fils, caractérisé par le fait que pour la conversion du spectre de fréquences des signaux numériques (d) produits dans un poste d'abonné numérique (A) en les impulsions d'émission (a) à émettre, il est prévu dans la partie émission du poste d'abonné numérique (a), une mémoire morte (S) dans des emplacements de mémoire de laquelle sont mémorisées sous forme codée des valeurs instantanées des impulsions des signaux d'émission et qui est attaquée en fonction des signaux numériques (d) de manière que les cellules de mémoire soient lues successivement et que les valeurs momentanées sont appliquées avec leur représentation codée à un décodeur (démodulateur) (D) qui en forme les impulsions des signaux d'émission correspondants (a).

2. Système de télécommunications numérique selon la revendication 1, caractérisé par le fait que les valeurs momentanées des impulsions des signaux d'émission sont mémorisées avec une représentation PCM.

3. Système de télécommunications numérique selon la revendication 1, caractérisé par le fait que les valeurs momentanées des impulsions des signaux d'émission sont mémorisées avec une représentation ΔM.

FIG 1

FIG 2